# EUROPÄISCHE PATENTSCHRIFT

(11) **EP 3 273 381 B1**
(45) Veröffentlichungstag und Bekanntmachung des Hinweises auf die Patenterteilung: **07.11.2018**
(21) Anmeldenummer: 17176998.7
(22) Anmeldetag: 20.06.2017
(51) Int. Cl.: G06K 7/10, G06K 17/00

(54) **RFID-VORRICHTUNG UND VERFAHREN ZUM KOMMUNIZIEREN MIT MINDESTENS EINEM RFID-TRANSPONDER**
RFID DEVICE AND METHOD FOR COMMUNICATING WITH AT LEAST ONE RFID TRANSPONDER
DISPOSITIF RFID ET PROCÉDÉ DE COMMUNICATION AVEC AU MOINS UN TRANSPONDEUR RFID

(30) Priorität: 19.07.2016 DE 102016113302
(43) Veröffentlichungstag der Anmeldung: 24.01.2018
(73) Patentinhaber: Sick AG, 79183 Waldkirch (DE)
(72) Erfinder: Pilzner, Olaf, 22455 Hamburg (DE)

(56) Entgegenhaltungen:
- EP-A1- 2 490 150
- EP-A1- 2 562 676
- EP-A1- 2 955 541
- US-A1- 2014 347 165

## Beschreibung

Die Erfindung betrifft eine RFID-Vorrichtung und ein Verfahren zum Kommunizieren mit mindestens einem RIFD-Transponder nach dem Oberbegriff von Anspruch 1 beziehungsweise 10.

RFID-Systeme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung, Lagerung und Sortierung von Gütern und Produkten zu steuern.

Die RFID-Transponder werden durch elektromagnetische Strahlung des Schreib-Lesesystems, auch Interrogator genannt, zur Abstrahlung der gespeicherten Information angeregt, wobei passive Transponder die notwendige Energie aus der Sendeenergie des Lesesystems beziehen und die weniger üblichen aktiven Transponder dafür eine eigene Versorgung besitzen. In dem hier hauptsächlich betrachteten und etablierten Ultrahochfrequenzstandard EPC Generation-2 UHF RFID, dessen Luftschnittstelle in ISO18000-6 definiert ist, werden passive Transponder nach dem Backscatter-Verfahren ausgelesen.

Eine Herausforderung in der RFID-Kommunikation ist die Vereinzelung. Damit ist gemeint, dass ein gleichzeitiges Senden mehrerer Transponder vermieden werden sollte, um Störungen und Fehlzuordnungen zu vermeiden. Die Vereinzelung soll vor allem auf Seiten der Transponder sehr einfach und ohne Abstimmungsaufwand erfolgen, da dort nur sehr begrenzte Rechenressourcen zur Verfügung stehen und auch das Zeitfenster des Kontakts in vielen Anwendungen für eine aufwändige Synchronisierung zu kurz wäre.

Das in ISO18000-6 definierte Anti-Kollisionsverfahren ermöglicht prinzipiell auch für Transponder identischen Inhalts eine Vereinzelung. Zunächst wird im sogenannten Inventory jeder Transponder einzeln und unabhängig von seinem Inhalt angesprochen und zur Kommunikation aufgefordert. In groben Zügen wird die Zeitdauer des Inventory, auch Runde genannt, in 2^{Q-1} Zeitscheiben oder Slots unterteilt. Q ist ein Parameter, den der Interrogator so setzt, dass in Anbetracht einer erwarteten oder bekannten Anzahl von Transpondern im Lesefeld die Wahrscheinlichkeit einer zufälligen Kollision klein ist, ohne dabei allzu viel Ansprechzeit durch leere Slots zu verlieren.

Jeder Transponder in Lesereichweite generiert sich nun anhand des Parameters Q eine Zufallszahl. Während des Inventory antwortet der Transponder nur in dem dadurch festgelegten Slot und schweigt ansonsten, um die Kommunikation zwischen Interrogator und anderen Transpondern nicht zu stören. In seinem festgelegten Slot kann der Transponder dem Interrogator unter anderem seinen eindeutigen Identifikationsparameter (UII, unique identification identifier) mitteilen. Nach Abschluss des Inventory kennt deshalb der Interrogator sämtliche Transponder, mit denen eine Kommunikation möglich ist. Da die Transponder ihre Slots unabhängig voneinander zufällig festlegen, sind Kollisionen nicht ausgeschlossen. Der Interrogator muss das erkennen und ein neues Inventory starten, gegebenenfalls mit anderem Q.

Der Interrogator kann auch weitergehenden Zugriff auf den Transponder im Rahmen eines Inventory erhalten, d.h. einen Access-Befehl übermitteln und ausführen. Dabei wird in der Regel ein Transponder mit einer bestimmten UII gesucht. Sobald sich also in einem Slot des Access-Inventory ein Transponder mit der gesuchten UII meldet, wird ein Handle angefragt, der Befehl mit diesem Handle an den Transponder gesendet, dort ausgeführt und bestätigt.

Dieses Vorgehen geht davon aus, dass die UII tatsächlich innerhalb der gesamten Transponderpopulation nur einmal vergeben ist, um niemals zwei Transponder mit gleicher UII zugleich im Lesefeld vorzufinden. Ansonsten würde der Access-Befehl von sämtlichen Transpondern ausgeführt, die innerhalb des Inventory die Bedingung erfüllen, nämlich hier dieselbe UII besitzen. Zwar kann die Anzahl Transponder, die an einem Inventory teilnehmen, durch vorab an die Transponder gesendete Filter eingegrenzt werden. Identische UIIs würden aber auch im Rahmen solcher Filter die gleichzeitige Teilnahme nicht verhindern. Das Inventory würde je nach Implementierung im Interrogator im besten Fall noch erkennen, dass eine UII mehrfach vergeben ist, aber im Anschluss die zugehörigen Transponder nicht mehr unterscheiden oder getrennt ansprechen können.

Tatsächlich ist es aber anders als bei HF-Transpondern dem Betreiber auferlegt, für diese Eindeutigkeit der UIIs zu sorgen. Es wird in der Regel ein Stapel beziehungsweise eine Rolle Transponder mit identisch vorprogrammierter UII geliefert, und vor dem eigentlichen Betrieb ist deshalb ein initiales Beschreiben mit unterschiedlichen UII erforderlich.

Um initial eine UII einem konkreten Transponder zuzuweisen und sie dort für den weiteren Betrieb zu speichern, ist die bekannte Vereinzelung daher ungeeignet. Stattdessen müssen die Transponder geometrisch-physikalisch vereinzelt werden, so dass durch entsprechende Aufbauten und gezielte Wahl der Sendeparameter des Interrogators mit genau dem gewünschten Transponder kommuniziert wird. Einige denkbare Maßnahmen hierfür sind eine möglichst kleine Distanz zwischen Interrogator und Transponder, eine Reduktion der Sendeleistung auf das kleinstmögliche Maß, konstruktive Maßnahmen, die andere Transponder abschatten oder eine geeignete lineare Polarisation. Ergänzend kann eine SELECT-Maske für die fabrikseitig gesetzte UII des Herstellers gesetzt werden, die aber nur die Gesamtheit der neuen Transponder von möglichen weiteren Transpondern trennt. All dies ist aufwändig und auch gar nicht in allen Situationen möglich. Schlägt die künstliche Vereinzelung fehlt, so erhalten alle versehentlich mit angesprochenen Transponder den Schreibbefehl auf die UII und tragen dann künftig die untereinander gleiche neue UII.

Häufig soll auf den Transponder mit der UII auch ein initialer Inhalt auf den Transponder geschrieben werden, wobei dieser Inhalt als einfaches Label oder in einer Umverpackung des Transponders etwa in Form eines Texts, Barcodes oder 2D-Codes vorgegeben wird. Entsprechend muss die Zuordnung zwischen Transponder und dieser Information zu genau diesem Zeitpunkt sichergestellt werden. Ansonsten werden nicht nur falsche UIIs vergeben, sondern auch sonstige Transponderdaten kompromittiert.

Manche Transpondertypen besitzen eine vom Hersteller programmierte Seriennummer in einem anderen Speicherbereich als demjenigen für die UII. Das ließe dann eine Vereinzelung mit Hilfe von SELECT-Masken zu, und auch die initiale UII könnte so zugewiesen werden. Das ist eine vergleichsweise zeitaufwändige Operation, zumal die Seriennummern zunächst auch noch aus den Transpondern ausgelesen werden müssen. Transponder mit vorprogrammierter Seriennummer stellen auch eher die Ausnahme dar, womit dieser Ansatz bestenfalls eine Teillösung bietet.

Insgesamt ist für die eineindeutige Zuordnung eines Befehls zu einem konkreten, bekannten Transponder ein nicht unerheblicher Aufwand zu betreiben. Die UII-Initialisierung ist mit teuren Konstruktionen verbunden und nur mit begrenzter Taktung möglich. Häufig wird das nicht "am Objekt" möglich sein, sondern erfordert einen zusätzlichen manuellen Prozess beispielsweise mit einem Handgerät.

Die EP 2 490 150 A1 offenbart einen RFID-Lesetunnel zum Auslesen von RFID-Transpondern in einem Lesebereich. Es wird mindestens eine zusätzliche Empfangsantenne außerhalb des Lesebereichs angeordnet, mit deren Hilfe überprüft wird, ob sich ein gelesener Transponder wirklich in dem Lesebereich befindet. Einleitend nennt die D1 außerdem eine Richtungsbestimmung anhand von Signalstärke oder Phase als eine zuvor bekannte Möglichkeit, eine korrekte Zuordnung einer aus einem Transponder gelesenen Information zu einem Objekt in dem Lesebereich zu gewährleisten.

In der US 2014/0347165 A1 wird ein Verfahren zum Prüfen der Entfernung eines RFID-Transponders beschrieben. Dazu werden Referenztransponder in einer Referenzentfernung angeordnet. Beim Lesen eines Transponders wird die Signalstärke mit der Referenzsignalstärke des Referenztransponders verglichen. Ist sie größer, wird angenommen, dass sich der Transponder näher an dem RFID-Leser befindet als der Referenztransponder.

Aus der EP 2 955 541 A1 ist eine Lokalisierung von Teilen mittels RFID oder Wi-Fi bekannt. Einleitend wird ausgeführt, dass zum Lokalisieren eine Triangulation anhand von RF-Parametern wie RSSI beziehungsweise TDOA (time difference of arrival) oder AOA (angle of arrival) üblich ist. Die D3 sieht diese herkömmlichen Verfahren für die Lokalisierung von Flugzeugteilen als ungeeignet an und schlägt stattdessen ein Differenzverfahren zweier Messungen mit unterschiedlicher Signalstärke und/oder unterschiedlichem Sichtbereich vor.

Die EP 2 562 676 A1 offenbart ein Verfahren und Schreib-Lesegerät für eine Anordnung mit einer Mehrzahl berührungslos auslesbarer Transponder. Bei den mehrfach durchgeführten Inventories wird neben den erkannten Transpondern auch eine Zusatzangabe mit Merkmalen der Funkverbindung gespeichert. Daraus wird dann ein Gütemaß der Erfassung abgeleitet, anhand dessen einer der Transponder ausgewählt wird.

Die Erfindung hat daher die Aufgabe, die Vereinzelung zu vereinfachen.

Diese Aufgabe wird durch eine RFID-Vorrichtung und ein Verfahren zum Kommunizieren mit mindestens einem RIFD-Transponder nach Anspruch 1 beziehungsweise 10 gelöst. Die RFID-Vorrichtung wird auch als Interrogator, RFID-Leser oder RFID-Schreib-Lesevorrichtung bezeichnet, denn üblicherweise ist eine RFID-Vorrichtung auch zum Schreiben in der Lage. Für die Kommunikation mit mehreren RIFD-Transpondern in Reichweite der RFID-Vorrichtung ist in einer Steuereinheit ein Vereinzelungsverfahren implementiert, um Befehle jeweils nur einem RFID-Transponder geben zu können. Solche Befehle sind meist Lese- oder Schreibbefehle, um Daten des RFID-Transponders auszulesen oder dort abzulegen, aber es gibt auch andere Befehle, die beispielsweise einen Zustandswechsel in dem RFID-Transponder auslösen.

Die Erfindung geht nun von dem Grundgedanken aus, das Vereinzelungsverfahren an eine Bedingung der Kommunikation an sich zu knüpfen, die in einem Kommunikationsparameter erfasst wird. Damit ist gemeint, dass nicht die in dem RFID-Signal codierten Inhalte, also die gemäß dem RFID-Protokoll ausgetauschten RFID-Informationen herangezogen werden, sondern Eigenschaften, die unabhängig von den RFID-Informationen aus dem RFID-Signal und insbesondere der Trägerwelle selbst abgeleitet werden. Der Kommunikationsparameter ist damit auch unabhängig von Daten, die auf dem RFID-Transponder abgelegt sind. Die Prüfung des Kommunikationsparameters ist vorzugsweise nicht als Ersatz, sondern als Ergänzung bekannter Vereinzelungsverfahren gedacht. Die Verwendung des Begriffs Kommunikationsparameter im Singular ist nur eine sprachliche Vereinfachung und schließt eine kombinierte Bewertung mehrerer Kommunikationsparameter ein.

Die Erfindung hat den Vorteil, dass weitere Kriterien geschaffen werden, um zu entscheiden, welcher RFID-Transponder einen Befehl erhält. Das ist auch ohne die einleitend beschriebenen Aufwände bei einer Initialisierung der UII möglich. Die Vereinzelung wird dadurch passend erweitert und deckt Situationen ab, die bisher zu Mehrdeutigkeiten führen konnten.

Der Kommunikationsparameter ist bevorzugt ein Pegel des RFID-Signals. Der Pegel, beispielsweise der RSSI (Received Signal Strength Indicator) hängt hauptsächlich vom Abstand zwischen der RFID-Vorrichtung und dem RFID-Transponder ab, aber auch davon, welche Materialien das RFID-Signal zu durchdringen hat und in welcher Ausrichtung der RFID-Transponder zur RFID-Vorrichtung steht. So unterscheidet sich der RSSI von der Vorder- und Rückseite eines Objekts je nach Material deutlich stärker, als dies die geometrischen Abmessungen des Objekts bewirken würden. Nutzt man den RSSI als Kriterium für die Initialisierung der UII, so genügt es jedenfalls, den zu beschreibenden RFID-Transponder nahe an die RFID-Vorrichtung zu bringen, Abschattungskonstruktionen sind überflüssig. Aber auch von diesem einfachen Beispiel abgesehen wird sich der RSSI zweier RFID-Transponder in vielen realen Anwendungsfällen erkennbar unterscheiden und so eine Vereinzelung ermöglichen.

Ein anderes bevorzugtes Beispiel für den Kommunikationsparameter ist die Phase beziehungsweise der Phasenwinkel der RFID-Antwort in Bezug auf das RFID-Sendesignal. Die Phase ist sowohl vom Abstand als auch von der Ausrichtung des RFID-Transponders zur RFID-Vorrichtung abhängig, und trotz Mehrdeutigkeit modulo der Wellenlänge ist eine zufällige Übereinstimmung der Phasen zweier RFID-Transponder-Kommunikationen in realen Anwendungsfällen eher unwahrscheinlich.

Der Kommunikationsparameter ist bevorzugt eine Richtung (DoA, Direction of Arrival), aus welcher das RFID-Signal empfangen wird. Diese Richtung wird beispielsweise als Winkelkorridor überprüft und ist beispielsweise aus einer Phasenmessung mit zwei Antennen bestimmbar.

Ein weiteres Beispiel für einen Kommunikationsparameter ist die Geschwindigkeit des RFID-Transponders, die über den Dopplereffekt gemessen werden kann.

Die Kommunikationsparameter können kombiniert werden. Das ermöglicht unter anderem eine Lokalisierung im Raum aus einer Phasenmessung mit mindestens zwei Antennen, wobei die Mehrdeutigkeit bezüglich der Wellenlänge durch den RSSI aufgelöst werden kann.

Die RFID-Vorrichtung ist bevorzugt für den UHF-Bereich nach ISO18000-6 ausgebildet. Das dort definierte Vereinzelungsverfahren kann erfindungsgemäß mit einem Überprüfen des Kommunikationsparameters erweitert werden. Dabei werden vorzugsweise die in dem Standard definierten Kommunikationsprotokolle eingehalten, so die RFID-Vorrichtung voll kompatibel bleibt.

Die Steuerungseinheit ist bevorzugt dafür ausgebildet, den Kommunikationsparameter während eines Inventory zu bestimmen. Das Inventory ist in ISO18000-6 definiert. Es ist in Ergänzung dazu möglich, weitere Kommunikationsparameter zu erfassen, und sie werden soweit später benötigt gespeichert.

Das Inventory unterteilt bevorzugt eine Zeitdauer einer Runde in eine Vielzahl von Slots, und die Steuerungseinheit bestätigt in jedem Slot, sofern darin genau ein RFID-Transponder antwortet, die Antwort und empfängt anschließend den eindeutigen Identifikationsparameter UII des antwortenden RFID-Transponders. Es versteht sich, dass hierfür die RFID-Transponder ebenfalls entsprechend ISO18000-6 ausgebildet sein müssen. Allerdings ist für die RFID-Transponder überhaupt keine Erweiterung notwendig, um die erfindungsgemäße Vereinzelung durchzuführen.

Die Steuerungseinheit ist bevorzugt dafür ausgebildet, zur Ausgabe von Befehlen an einen bestimmten RFID-Transponder den Kommunikationsparameter in einem erweiterten Inventory zu prüfen. Die Erweiterung der Vereinzelung nach ISO-18000-6 knüpft also direkt an das vorhandene Inventory beziehungsweise Access-Inventory an und fügt lediglich zusätzliche Abfragen des Kommunikationsparameters hinzu. Das ist einfach zu implementieren und bleibt standardkonform. Bevorzugt ist der Kommunikationsparameter zuvor in einem herkömmlichen Inventory erfasst, es wird also gezielt ein Transponder mit einem zuvor gemessenen Kommunikationsparameter angesprochen. Es ist aber alternativ auch denkbar, den Kommunikationsparameter erst in dem erweiterten Inventory zu bestimmen und direkt anschließend mit einer Vorgabe zu vergleichen, die eine Vereinzelung auch ohne Kenntnis der Kommunikationsparameter anderer RFID-Transponder ermöglicht. Beispiele sind die Vorgabe eines sehr engen Winkelkorridors oder ein sehr starker RSSI. Das ist nämlich praktisch nicht von zwei RFID-Transpondern zugleich erfüllbar.

Die Steuerungseinheit ist bevorzugt dafür ausgebildet, einen Schreibbefehl zum Setzen des eindeutigen Identifikationsparameters UII an einen bestimmten RFID-Transponder zu geben. Die erfindungsgemäß ergänzte Vereinzelungsstrategie, insbesondere das erweiterte Inventory gemäß dem vorigen Absatz, wird also dafür genutzt, das Initialisierungsproblem der UII zu lösen. Ist auf diese Weise eine eindeutige Initialisierung der UII in der Transponderpopulation trotz zunächst herstellerseitig gleich gesetzter UIIs und insgesamt identischer Inhalte der RFID-Transponder sichergestellt, so kann ansonsten wieder auf herkömmliche Art und Weise kommuniziert werden. Diese Art der Initialisierung ist wesentlich flexibler, damit günstiger und schneller als das bisherige Vorgehen. Nebeneinander liegende Transponder müssen nur noch einen erkennbaren Abstand zueinander haben, eine künstliche Abschattung zur physischen Unterbindung der Kommunikation mehrerer RFID-Transponder kann entfallen. Die RFID-Transponder können an den Objekten verbleiben, da die Selektion beispielsweise über RSSI, Phase oder DoA immer noch möglich ist. RFID-Transponder können sogar gestapelt initialisiert werden, weil zumindest unter geeigneten Rahmenbedingungen über RSSI und Phase beispielsweise der jeweils oberste noch nicht initialisierte RFID-Transponder ausgewählt werden kann.

Die Steuerungseinheit ist bevorzugt dafür ausgebildet, RIFD-Transponder mit einem vorgegebenen eindeutigen Identifikationsparameter UII zu selektieren. Ein Select auf eine bestimmte UII soll nach ISO18000-6 für sich für eine Vereinzelung ausreichen, und dies ist nach einer Initialisierung etwa wie im Vorabsatz auch der Fall. Bei ab Hersteller erst einmal mehrfach vergebener UII sorgt ein entsprechendes Select aber zumindest dafür, dass bis zum Abschluss der Initialisierung nur solche RFID-Transponder angesprochen werden, die noch die Hersteller-UII tragen, beziehungsweise dass umgekehrt solche RFID-Transponder gerade nicht abgefragt werden.

Die Steuerungseinheit ist bevorzugt dafür ausgebildet, einem antwortenden RFID-Transponder mit korrektem eindeutigen Identifikationsparameter UII, jedoch nicht passendem Kommunikationsparameter einen Leerbefehl zu geben. Das dient einer einfachen Erweiterung des Inventory gemäß ISO18000-6, denn das Verhalten bleibt so weit wie möglich unangetastet. Der allein über den Kommunikationsparameter unterschiedene RFID-Transponder führt den richtigen Befehl aus. Ein weiterer RFID-Transponder, der nach allen herkömmlichen Kriterien den Befehl ebenfalls auszuführen hat, bedarf keiner besonderen Behandlung, denn auch dieser RFID-Transponder erhält einen Befehl und antwortet daher auch wie üblich mit einer Vollzugsmeldung. Der Befehl ist aber ein Leer- oder Dummybefehl, der im RFID-Transponder nichts ändert, jedoch dem definierten Kommunikationsprotokoll genügt und für diesen RFID-Transponder korrekt abschließt.

Die Steuerungseinheit ist bevorzugt dafür ausgebildet, eine Initialisierung mit Schreibbefehlen zum Setzen der eindeutigen Identifikationsparameter UII zu starten, wenn mehr als ein RFID-Transponder mit demselben eindeutigen Identifikationsparameter UII antwortet. Das entspricht einer automatischen Initialisierung, sobald zwei oder mehr RFID-Transponder mit gleicher UII erkannt worden sind. Eigentlich darf das nicht vorkommen, weil der Betrieb nur mit korrekt initialisierten RFID-Transpondern durchgeführt wird. Falls aber doch, wird durch das Neuschreiben der UII eine nochmalige Konfusion verhindert, insbesondere in anderen RFID-Systemen, die das erfindungsgemäße Verfahren nicht kennen oder nutzen. Das Schreiben der UII ist nicht in allen Anwendungen zulässig, die RFID-Vorrichtung sollte dafür entsprechende Rechte beziehungsweise die Hoheit über ihre Transponderpopulation haben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Überblicksdarstellung einer RFID-Vorrichtung mit meh-reren RFID-Transpondern in Lesereichweite;
- Fig. 2: ein beispielhaftes Ablaufdiagramm für ein Inventory, in dem die in Lesereichweite befindlichen RFID-Transponder samt ihren Kommunikationsparametern erfasst werden;
- Fig. 3: ein beispielhaftes Ablaufdiagramm für ein Access-Inventory ähnlich Figur 2, in dem jedoch RFID-Transponder mit einer bestimmten UII einen Befehl ausführen; und
- Fig. 4: ein beispielhaftes Ablaufdiagramm als Erweiterung des Access-Inventory gemäß Figur 3, in dem die Übertragung eines Befehls an einen RFID-Transponder zusätzlich an die Erfüllung bestimmter Kommunikationspara-meter geknüpft ist.

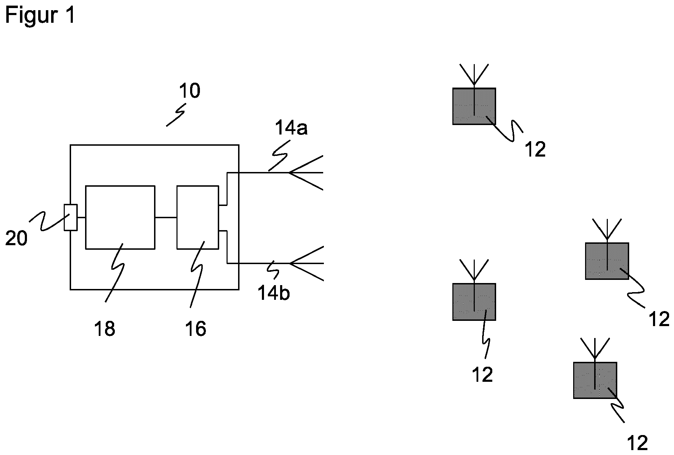

Figur 1 zeigt eine schematische Überblicksdarstellung einer RFID-Vorrichtung 10 und einiger beispielhaft in deren Lesereichweite angeordneter RFID-Transponder 12. Die RFID-Vorrichtung 10 weist in dieser Ausführungsform zwei Antennen 14a-b auf, um über Phasenmessungen der einlaufenden Wellen eine Ortung der RFID-Transponder 12 vornehmen zu können. In alternativen Ausführungsformen gibt es nur eine Antenne oder umgekehrt noch weitere Antennen.

Mit Hilfe eines Transceivers 16 sendet und empfängt die RFID-Vorrichtung 10 über die Antennen 14a-b RFID-Signale. Eine Steuerungseinheit 18, beispielsweise mit einem Digitalbaustein wie einem Mikroprozessor oder einem FPGA (Field Programmable Gate Array), steuert die Abläufe in der RFID-Vorrichtung 10 und ist in der Lage, RFID-Informationen in ein RFID-Signal zu codieren beziehungsweise eine RFID-Information aus einem RFID-Signal auszulesen. Ein drahtgebundener oder drahtloser Anschluss 20 dient dazu, die RFID-Lesevorrichtung 10 in ein übergeordnetes System einzubinden.

Im Detail erfolgt die Kommunikation vorzugsweise gemäß einem bekannten RFID-Protokoll, insbesondere ISO 18000-6 oder EPC Generation-2 UHF RFID, und die dafür erforderlichen Schritte und Komponenten sind an sich bekannt, so weiter unten nur die für das Verständnis der Erfindung relevanten Aspekte näher erläutert werden. Ebenso wird der über die groben Funktionsblöcke hinausgehende genaue Aufbau der RFID-Lesevorrichtung 10 als bekannt vorausgesetzt.

Eine zentrale Problemstellung der Kommunikation zwischen RFID-Vorrichtung 10 und den RFID-Transpondern 12 ist die Vereinzelung: Es sollen nicht mehrere RFID-Transponder 12 gleichzeitig senden, und die RFID-Vorrichtung 10 soll in der Lage sein, gezielt einen einzelnen RFID-Transponder 12 anzusprechen. Die Standardmaßnahme für die Auswahl bestimmter RFID-Transponder 12 sind Filter etwa mittels Select, woraufhin nur noch RFID-Transponder 12 antworten, welche die Filterbedingung erfüllen. Außerdem weist jeder RFID-Transponder 12 in einem richtig aufgesetzten System einen eindeutigen Identifikationsparameter auf.

Vor einer konkreten Kommunikation mit einem RFID-Transponder 12, beispielsweise um dessen Daten auszulesen oder zu verändern, verschafft sich die RFID-Vorrichtung 10 üblicherweise einen Überblick über die in Lesereichweite vorhandenen RFID-Transponder 12 im Rahmen eines Inventory.

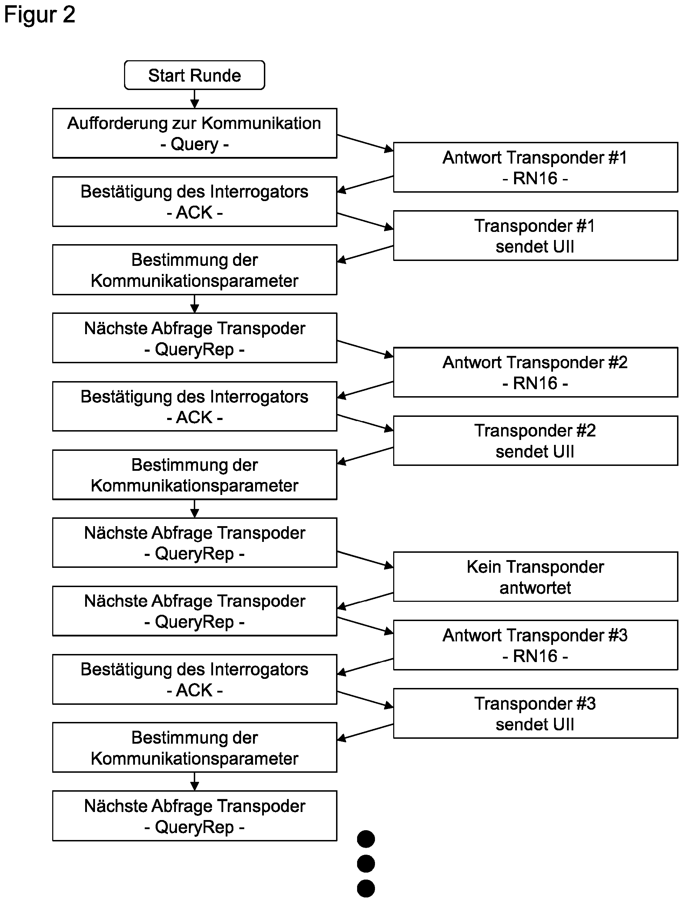

Figur 2 zeigt einen beispielhaften Ablauf eines Inventory. Das entspricht weitgehend dem Standard, wobei jedoch zusätzlich mindestens ein Kommunikationsparameter bestimmt und in der RFID-Vorrichtung 10 gespeichert wird. Kommunikationsparameter sind Eigenschaften, die unabhängig von der darin codierten RFID-Information aus dem RFID-Signal gewonnen werden, wie beispielsweise ein Pegel (RSSI), eine Phase oder eine Richtung (DoA, Direction of Arrival). In einer RFID-Vorrichtung 10 gemäß Figur 1 können Kommunikationsparameter einzeln für beide Antennen 14a-b oder nach kombinierter Auswertung erfasst werden.

In Figur 2 sind Aktionen der RFID-Vorrichtung 10 beziehungsweise des Interrogators während eines Inventory links und Aktionen der Transponder rechts gezeigt. Das Inventory umfasst eine Runde von 2^{Q-1} Slots. Mit dem Start der Runde übermittelt der Interrogator auch den Parameter Q an die Transponder, die sich daraufhin zufällig einen Slot auswählen. Die Runde beginnt dann im ersten Slot mit der Aufforderung des Interrogators zur Kommunikation (Query). Ein erster Transponder antwortet mit einer Zufallszahl (RN16), deren Empfang der Interrogator umgehend bestätigt (ACK). Bleibt die Bestätigung innerhalb einer gewissen Zeitdauer beispielsweise aufgrund einer Kollision aus, so schweigt der erste Transponder für diese Runde. Auf die Bestätigung (ACK) hin sendet der erste Transponder seine UII. Der Interrogator kennt nun den ersten Transponder samt eindeutigem Identifikationsparameter UII und bestimmt noch die erforderlichen Kommunikationsparameter aus dem RFID-Signal. Es folgt der zweite Slot, in dem ganz analog UII und Kommunikationsparameter eines zweiten Transponders erfasst werden. In einem dritten Slot bleibt die Abfrage (QueryRep) des Interrogators unbeantwortet, weil kein Transponder den dritten Slot zufällig ausgewählt hat. Im vierten Slot wiederum wird ein dritter Transponder mit UII und Kommunikationsparameter gefunden. Entsprechend setzt sich das Inventory über alle Slots der Runde fort.

Außer den gezeigten Slots, in denen genau ein Transponder erfasst wird oder in denen alle Transponder schweigen, gibt es auch die Möglichkeit einer Kollision, weil mehrere Transponder sich zufällig den gleichen Slot gewählt haben. Das erkennt der Interrogator und muss das Inventory wiederholen, eventuell mit anderem Q.

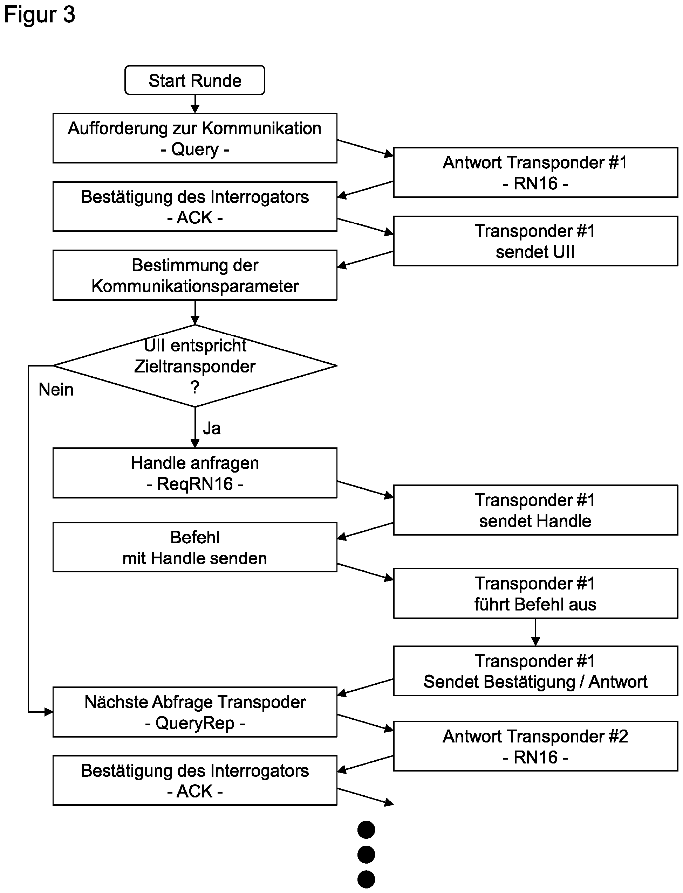

Figur 3 zeigt den Ablauf, wenn der Interrogator im Rahmen eines Inventory einem Transponder mit einer bestimmten UII einen Befehl erteilt, also ein Access-Inventory. Die ersten Schritte in einem Slot, in dem ein Transponder antwortet, sind die gleichen wie in dem Inventory nach Figur 2. Anschließend folgt aber eine Abfrage, ob diese UII mit der bestimmten UII des Zieltransponders übereinstimmt. Ist das der Fall, fragt der Interrogator von dem Transponder ein Handle an und übermittelt anschließend den Befehl mit diesem Handle, und der Transponder führt den Befehl aus und meldet anschließend die Antwort oder eine Bestätigung. Stimmt andererseits die UII nicht, geht es direkt im nächsten Slot weiter.

Diese Art des Zugriffs setzt voraus, dass die UII tatsächlich eindeutig ist, was aber wie einleitend diskutiert für neue Transponder nicht gegeben ist: Der Befehl wird auf allen Transpondern mit der bestimmten UII ausgeführt. Das gilt insbesondere auch für einen Befehl, mit dem die UII geschrieben und dadurch initialisiert werden soll.

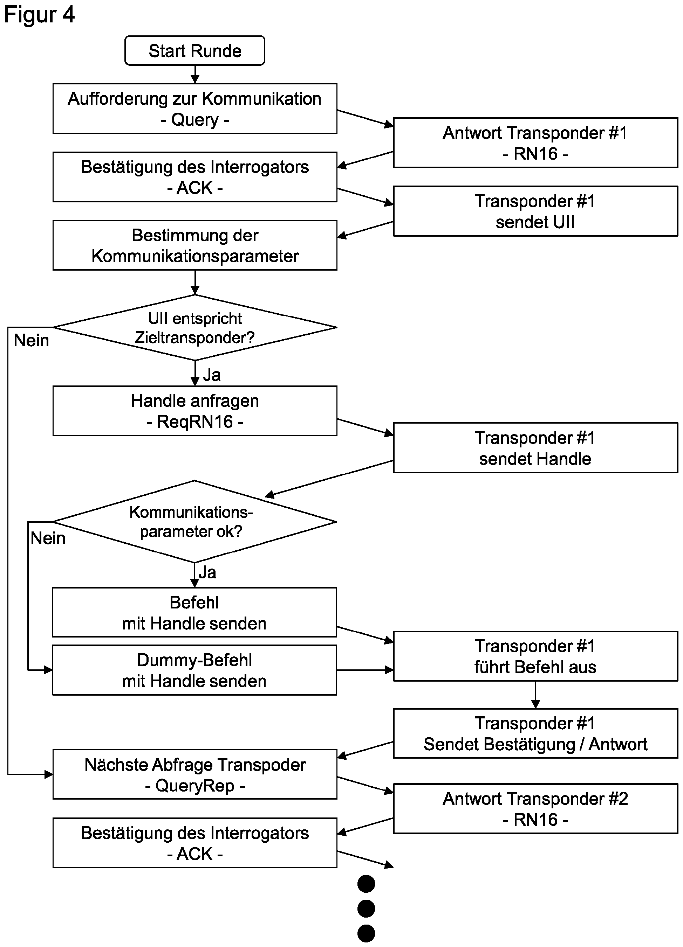

Figur 4 zeigt den Ablauf eines erweiterten Access-Inventory, das zusätzlich vor dem eigentlichen Befehl (Access) eine Überprüfung von Kommunikationsparametern vornimmt. Die Ausführung eines Befehls, insbesondere eines Schreibbefehls zum Initialisieren der UII, wird also an eine zusätzliche Bedingung geknüpft, die aus einer Eigenschaft des Transponders beziehungsweise der Verbindung zu dem Transponder abgeleitet ist.

Der Ablauf gemäß Figur 3 ist deshalb nach der Abfrage, ob der in einem Slot kommunizierende Transponder die gewünschte UII aufweist, um eine weitere Überprüfung erweitert, welche die Kommunikationsparameter prüft. Nur wenn die Kommunikationsparameter dieser Prüfung standhalten, wird ein Befehl an den Transponder übergeben, ansonsten soll der Befehl für diesen Transponder trotz übereinstimmender UII nicht ausgeführt werden. Im Beispiel der Figur 4 ist das vorteilhaft mit einem Leer- oder Dummy-Befehl gelöst. Dadurch bleibt der Gesamtablauf auf der Luftschnittstelle und vor allem in dem internen Zustandsautomaten des Transponders möglichst unberührt. Das Ergebnis ist aber das gleiche, denn der Leerbefehl verändert in dem Transponder nichts und liefert auch keine relevante Transponderinformation zurück.

Beispiele für zu prüfende Kommunikationsparameter sind der Pegel (RSSI), die Phase oder ein Winkel, in welcher der Transponder liegt (DoA), wobei diese Kommunikationsparameter einzeln oder in Kombinationen geprüft werden können. Als Bedingung kann beispielsweise gefordert sein, dass diese Werte in einem bestimmten Korridor liegen. Der Vergleichswert orientiert sich entweder an Kommunikationsparametern, die zuvor in einem Inventory nach Figur 2 erfasst wurden. Dann werden sozusagen die Transponder des früheren Inventory auch bei übereinstimmender UII anhand ihrer Kommunikationsparameter wiedererkannt. Außerdem können Transponder aufgrund der Kommunikationsparameter in eine Reihenfolge gebracht und ein Transponder an einer bestimmten Position dieser Reihenfolge ausgewählt oder die Reihenfolge abgearbeitet werden. Ein Beispiel ist DoA und eine Reihenfolge von links nach rechts, ein anderes Beispiel RSSI und eine Reihenfolge von stark zu schwach, was in bestimmten Anwendungen mit nah zu fern korrespondiert. Dabei sind auch Hilfsgrößen denkbar, wie eine Anordnung von Transpondern, die aus Bildern einer parallel betriebenen Kamera bestimmt oder damit plausibilisiert ist, oder eine manuelle Auswahl in einer grafischen Oberfläche mit Visualisierung von Transponderpositionen.

Es ist alternativ möglich, zuvor kein Inventory durchzuführen und den Befehl unmittelbar innerhalb des erweiterten Access-Inventory zu erteilen. Die Bedingung an die Kommunikationsparameter wird dann a priori so gesetzt, dass sie für eine Vereinzelung sorgt, etwa indem ein fester, sehr schmaler Winkelkorridor oder eine hohe RSSI-Schwelle gesetzt wird. Es ist dann praktisch kaum noch denkbar, dass diese Bedingung zufällig von mehreren Transpondern erfüllt wird, jedoch einfach möglich, gezielt einen beispielsweise mit einer UII zu initialisierenden Transponder geeignet zu platzieren.

Das erweiterte Access-Inventory ermöglicht eine Auswahl, ob ein Transponder mit den gewünschten Daten und insbesondere einer initialen UII beschrieben werden soll, direkt während eines Inventory insbesondere zum Zeitpunkt der UII-Übermittlung, und zwar auch dann, wenn die Transponder einschließlich ihrer UII identisch sind. Unterschiedliche Transponder mit identischer UII antworten während des Inventory innerhalb verschiedener Slots. Mit diesen Antworten können die Kommunikationseigenschaften oder Kommunikationsparameter wie RSSI, Phasenwinkel oder DoA für jeden der Transponder bestimmt und überprüft werden. Wie oben an mehreren Beispielen illustriert, muss ein antwortender Transponder bestimmte Vorgaben an die Kommunikationsparameter erfüllen, um tastsächlich den Befehl zu erhalten. Dadurch ist eine Vereinzelung auch bei identischer UII möglich. Dies wird insbesondere bei der Initialisierung genutzt, um werkseitig gleiche UIIs neu und innerhalb der Transponderpopulation tatsächlich einmalig vergeben. Danach kann die RFID-Kommunikation auch wieder nach dem Standard und damit ohne Überprüfung von Kommunikationsparametern erfolgen, weil die UII zur Vereinzelung ausreicht.

## Patentansprüche

1. RFID-Vorrichtung (10) für den UHF-Bereich nach ISO 18000-6 zum Kommunizieren mit mindestens einem RFID-Transponder (12), die einen RFID-Transceiver (16) zum Abstrahlen und Empfangen von RFID-Signalen und eine Steuerungseinheit (18) aufweist, die dafür ausgebildet ist, gemäß einem RFID-Protokoll eine RFID-Information in das RFID-Signal zu codieren oder aus dem RFID-Signal auszulesen und in der ein Vereinzelungsverfahren implementiert ist, um einen Befehl anhand eines Identifikationsparameters (UII) jeweils nur einem RFID-Transponder (12) zu geben,
**dadurch gekennzeichnet,**
**dass** die Steuerungseinheit (18) dafür ausgebildet ist, zur Erweiterung des Vereinzelungsverfahrens einem Inventory eine zusätzliche Prüfung eines Kommunikationsparameters des RFID-Signals selbst hinzuzufügen, der von in dem RFID-Signal codierten RFID-Informationen unabhängig ist, so dass auch eine Vereinzelung von RFID-Transpondern (12) mit identischem Identifikationsparameter (UII) möglich ist.

2. RFID-Vorrichtung (10) nach Anspruch 1,
wobei der Kommunikationsparameter ein Pegel oder eine Phase des RFID-Signals ist.

3. RFID-Vorrichtung (10) nach Anspruch 1 oder 2,
wobei der Kommunikationsparameter eine Richtung ist, aus welcher das RFID-Signal empfangen wird.

4. RFID-Vorrichtung (10) nach einem der vorhergehenden Ansprüche,
wobei die Steuerungseinheit (18) dafür ausgebildet ist, den Kommunikationsparameter während eines Inventory zu bestimmen.

5. RFID-Vorrichtung (10) nach Anspruch 4,
wobei das Inventory eine Zeitdauer einer Runde in eine Vielzahl von Slots unterteilt und die Steuerungseinheit (18) in jedem Slot, sofern darin genau ein RFID-Transponder (12) antwortet, die Antwort bestätigt und anschließend den eindeutigen Identifikationsparameter UII des antwortenden RFID-Transponders (12) empfängt.

6. RFID-Vorrichtung (10) nach einem der vorhergehenden Ansprüche,
wobei die Steuerungseinheit (18) dafür ausgebildet ist, einen Schreibbefehl zum Setzen des eindeutigen Identifikationsparameters UII an einen bestimmten RFID-Transponder (12) zu geben.

7. RFID-Vorrichtung (10) nach einem der vorhergehenden Ansprüche,
wobei die Steuerungseinheit (18) dafür ausgebildet ist, RIFD-Transponder (12) mit einem vorgegebenen eindeutigen Identifikationsparameter UII zu selektieren.

8. RFID-Vorrichtung (10) nach einem der vorhergehenden Ansprüche,
wobei die Steuerungseinheit (18) dafür ausgebildet ist, einem antwortenden RFID-Transponder (12) mit korrektem eindeutigen Identifikationsparameter UII, jedoch nicht passendem Kommunikationsparameter einen Leerbefehl zu geben, der in dem RFID-Transponder (12) nichts ändert, jedoch dem RFID-Protokoll genügt.

9. RFID-Vorrichtung (10) nach einem der vorhergehenden Ansprüche,
wobei die Steuerungseinheit (18) dafür ausgebildet ist, eine Initialisierung mit Schreibbefehlen zum Setzen der eindeutigen Identifikationsparameter UII zu starten, wenn mehr als ein RFID-Transponder (12) mit demselben eindeutigen Identifikationsparameter UII antwortet.

10. Verfahren zum Kommunizieren mit mindestens einem RFID-Transponder (12) im UHF-Bereich nach ISO 18000-6, wobei RFID-Signale an den RFID-Transponder (12) gesendet und von dem RFID-Transponder (12) empfangen werden und in die RFID-Signale gemäß einem RFID-Protokoll eine RFID-Information codiert ist, wobei aufgrund eines Vereinzelungsverfahrens ein Befehl anhand eines Identifikationsparameters (UII) jeweils nur einem RFID-Transponder (12) gegeben wird,
**dadurch gekennzeichnet,**
**dass** zur Erweiterung des Vereinzelungsverfahrens einem Inventory eine zusätzliche Prüfung eines Kommunikationsparameters des RFID-Signals selbst hinzugefügt wird, der von in dem RFID-Signal codierten RFID-Informationen unabhängig ist, so dass auch RFID-Transpondern (12) mit identischem Identifikationsparameter (UII) vereinzelt werden.

11. Verfahren nach Anspruch 10,
wobei der Kommunikationsparameter ein Pegel des RFID-Signals, eine Phase oder eine Richtung ist, aus welcher das RFID-Signal empfangen wird.

12. Verfahren nach Anspruch 10 oder 11,
wobei das RFID-Protokoll dasjenige der ISO18000-6 ist, der Kommunikationsparameter während eines Inventory bestimmt und zur Ausgabe von Befehlen an einen bestimmten RFID-Transponder (12) in dem mit der zusätzlichen Prüfung des Kommunikationsparameters erweiterten Inventory geprüft wird.

13. Verfahren nach Anspruch 12,
wobei zur Initialisierung einer Population von RIFD-Transpondern (12) in dem erweiterten Inventory den RFID-Transpondern (12) jeweils einzeln ein Schreibbefehl zum Setzen des eindeutigen Identifikationsparameters UII gegeben wird.

## Claims

1. An RFID apparatus (10) for the UHF range in accordance with ISO 18000-6 for communicating with at least one RFID transponder (12), the RFID apparatus (10) comprising an RFID transceiver (16) for radiating and receiving RFID signals and a control unit (18) that is configured to encode RFID information into the RFID signal or to read it from the RFID signal in accordance with an RFID protocol, and a singulation process being implemented in the control unit with the singulation process being adapted to give a command to only one respective RFID transponder (12) based on an identification parameter (UII),
**characterized in that** the control unit (18) is configured to add an additional check of a communication parameter of the RFID signal itself, which is independent of RFID information encoded in the RFID signal, to an inventory for expanding the singulation process, so that also a singulation of RFID transponders (12) having an identical identification parameter (UII) is possible.

2. The RFID apparatus (10) in accordance with claim 1,
wherein the communication parameter is one of a level and a phase of the RFID signal.

3. The RFID apparatus (10) in accordance with claim 1 or 2,
wherein the communication parameter is a direction from which the RFID signal is received.

4. The RFID apparatus (10) in accordance with any of the preceding claims,
wherein the control unit (18) is configured to determine the communication parameter during an inventory.

5. The RFID apparatus (10) in accordance with claim 4,
wherein the inventory divides a time duration of a round into a plurality of slots and the control unit (18) acknowledges the response in each slot, provided that exactly one RFID transponder (12) responds therein, and subsequently receives the unique identification parameter UII of the responding RFID transponder (12).

6. The RFID apparatus (10) in accordance with any of the preceding claims,
wherein the control unit (18) is configured to give a write command for setting the unique identification parameter UII to a specific RFID transponder (12).

7. The RFID apparatus (10) in accordance with any of the preceding claims,
wherein the control unit (18) is configured to select RFID transponders (12) having a predefined unique identification parameter UII.

8. The RFID apparatus (10) in accordance with any of the preceding claims,
wherein the control unit (18) is configured to give a dummy command, which does not change anything in the RFID transponder (12), but is in accordance with the RFID protocol, to a responding RFID transponder (12) having a correct unique identification parameter UII, but not having a matching communication parameter.

9. The RFID apparatus (10) in accordance with any of the preceding claims,
wherein the control unit (18) is configured to start an initialization with write commands for setting the unique identification parameter UII when more than one RFID transponder (12) responds with the same unique identification parameter UN.

10. A method for communicating with at least one RFID transponder (12) in the UHF range in accordance with ISO 18000-6, wherein RFID signals are transmitted to the RFID transponder (12) and are received by the RFID transponder, wherein RFID information is encoded in the RFID signals in accordance with an RFID protocol, and wherein a command is given to only one respective RFID transponder (12) on the basis of a singulation process based on an identification parameter (UII),
**characterized in that**, in order to expand the singulation process, an additional check of a communication parameter of the RFID signal itself, which is independent of RFID information encoded in the RFID signal, is added to an inventory, so that also RFID transponders (12) having an identical identification parameter (UII) are singulated.

11. The method in accordance with claim 10,
wherein the communication parameter is a level of the RFID signal, a phase or a direction from which the RFID signal is received.

12. The method in accordance with claim 10 or 11,
wherein the RFID protocol is that of ISO 18000-6, the communication parameter is determined during an inventory and, for giving commands to a specific RFID transponder (12), is checked in the expanded inventory having the additional check of the communication parameter.

13. The method in accordance with claim 12,
wherein a write command for setting the unique identification parameter UII is given respectively individually to the RFID transponders (12) in the expanded inventory to initialize a population of RFID transponders (12).

## Revendications

1. Dispositif RFID (10) pour la plage UHF selon ISO 18000-6 pour communiquer avec au moins un transpondeur RFID (12), qui comprend un émetteur-récepteur RFID (16) pour émettre et recevoir des signaux RFID, et une unité de commande (18) réalisée pour coder une information RFID dans le signal RFID selon un protocole RFID ou pour la lire dans le signal RFID, et dans laquelle est implémenté un procédé d'individualisation pour émettre une instruction à un seul transpondeur RFID respectif (12) en se basant sur un paramètre d'identification (UII),
**caractérisé en ce que**
afin d'élargir le procédé d'individualisation, l'unité de commande (18) est réalisée pour ajouter à un inventaire un contrôle supplémentaire d'un paramètre de communication du signal RFID lui-même, qui est indépendant des informations RFID codées dans le signal RFID, de sorte que même une individualisation de transpondeurs RFID (12) ayant des paramètres d'identification identiques (UII) est possible.

2. Dispositif RFID (10) selon la revendication 1,
dans lequel
le paramètre de communication est un niveau ou une phase du signal RFID.

3. Dispositif RFID (10) selon la revendication 1 ou 2,
dans lequel
le paramètre de communication a une direction depuis laquelle le signal RFID est reçu.

4. Dispositif RFID (10) selon l'une des revendications précédentes,
dans lequel
l'unité de commande (18) est réalisée pour déterminer le paramètre de communication pendant un inventaire.

5. Dispositif RFID (10) selon la revendication 4,
dans lequel
l'inventaire subdivise une durée temporelle d'un tour en une multitude de slots, et l'unité de commande (18) - sous réserve que précisément un transpondeur RFID (12) réponde - confirme la réponse dans chaque slot et reçoit ensuite le paramètre d'identification univoque UII du transpondeur RFID (12) qui répond.

6. Dispositif RFID (10) selon l'une des revendications précédentes,
dans lequel
l'unité de commande (18) est réalisée pour donner à un transpondeur RFID (12) déterminé une instruction d'écriture pour poser le paramètre d'identification UII univoque.

7. Dispositif RFID (10) selon l'une des revendications précédentes,
dans lequel
l'unité de commande (18) est réalisée pour sélectionner des transpondeurs RFID (12) ayant un paramètre d'identification UII univoque donné.

8. Dispositif RFID (10) selon l'une des revendications précédentes,
dans lequel
l'unité de commande (18) est réalisée pour donner à un transpondeur RFID (12) qui répond et qui a un paramètre d'identification UII univoque correct mais qui n'a pas de paramètre de communication adéquat, une instruction vide qui ne modifie rien dans le transpondeur RFID (12) mais qui satisfait le protocole RFID.

9. Dispositif RFID (10) selon l'une des revendications précédentes,
dans lequel
l'unité de commande (18) est réalisée pour démarrer une initialisation avec des instructions d'écriture pour poser les paramètres d'identification UII univoques lorsque plus d'un transpondeur RFID (12) ayant le même paramètre d'identification UII univoque répondent.

10. Procédé pour communiquer avec au moins un transpondeur RFID (12)
dans la plage UHF selon ISO 18000-6,
dans lequel
des signaux RFID sont émis au transpondeur RFID (12) et sont reçus du transpondeur RFID (12), et
une information RFID est codée dans le signal RFID selon un protocole RFID,
au moyen d'un procédé d'individualisation une instruction est donnée à un seul transpondeur RFID (12) respectif en se basant sur un paramètre d'identification (UII),
**caractérisé en ce que**
afin d'élargir le procédé d'individualisation, un contrôle supplémentaire d'un paramètre de communication du signal RFID lui-même est ajouté à un inventaire, qui est indépendant des informations RFID codées dans le signal RFID, de sorte que même des transpondeurs RFID (12) ayant des paramètres d'identification identiques (UII) sont individualisés.

11. Procédé selon la revendication 10,
dans lequel
le paramètre de communication est un niveau du signal RFID, une phase ou une direction depuis laquelle le signal RFID est reçu.

12. Procédé selon la revendication 10 ou 11,
dans lequel
le protocole RFID est celui de la norme ISO 18000-6,
le paramètre de communication est déterminé pendant un inventaire et est contrôlé dans l'inventaire élargi par le contrôle supplémentaire du paramètre de communication, pour émettre des instructions à un transpondeur RFID (12) déterminé.

13. Procédé selon la revendication 12,
dans lequel
pour initialiser une population de transpondeurs RFID (12), dans l'inventaire élargi, une instruction d'écriture respective pour poser le paramètre d'identification UII univoque est donnée individuellement aux transpondeurs RFID (12).
